# EUROPEAN PATENT APPLICATION

(11) **EP 1 815 957 A2**
(43) Date of publication of application: **08.08.2007**
(21) Application number: 07101666.1
(22) Date of filing: 02.02.2007
(51) Int. Cl.: B28B 11/04, B05C 19/04

(54) **Conveyor for transporting ceramic tiles or similar articles**

(30) Priority: 07.02.2006 IT BO20060069
(71) Applicant: Air Power Group S.p.A., 42013 Casalgrande (Reggio Emilia) (IT)
(72) Inventor: Malavasi, Paolo, 41019, Soliera (Modena) (IT)
(74) Representative: Dall'Olio, Giancarlo

(57) **Abstract**

The conveyor device 10 for transporting ceramic tiles 1 or similar articles is mounted on an application line 100 suitable to apply a decorating product, as glaze for ceramic tiles, to the tiles 1 by means of a veil glazing apparatus 2. This latter is fit to generate a continuous glaze veil 3 fit to be laid down on a face 1a of said ceramic tiles 1 while the same are forwarded by the conveyor device 10 through the glaze veil 3.

The conveyor device 10 comprises an upstream conveyor branch 15 and a downstream conveyor branch 16, subsequently arranged, which define a transverse gap 12 therebetween, at the falling surface of the glaze veil 3. Said transverse gap can be arranged slantwise with respect to the tiles 1 forwarding direction, and it can have a rectilinear or curvilinear shape.

Each conveyor branch 15,16 comprises a plurality of narrow belts 11 which extend on a closed loop, arranged side by side, substantially parallel one each other and at a predefined mutual distance.

The belts 11 are preferably made with closed-loop transmission belts, having a trapezoidal cross section and toothed on their inner face.

## Description

The present invention fits into the technical sector concerning the manufacturing of ceramic articles, like ceramic tiles or similar articles.

More particularly the present invention relates to a continuous conveyor device for sequentially forwarding ceramic tiles in a line for applying a veil of a product, as for example a glaze, on the tiles surface.

In a known glazing process commonly used in the ceramic industry, a homogeneous film of liquid glaze is applied to the visible face of ceramic tiles by forwarding the same tiles through a veil of glaze falling from an apparatus known as veil glazing apparatus.

In the glazing lines using the aforesaid glazing technique, tiles are usually conveyed toward the veil, then through the same veil, and finally forwarded toward subsequent processing stations, e.g. a continuous oven for cooking the tiles. Tiles are transported by means of a continuous carpet conveyor or belt conveyor, supported and driven by suitable groups of rollers and pulleys. The conveyor carries the tiles laying on its upper, active branch, along a transport plane.

The glaze which does not reach the tiles and crosses the transport plane is collected on a suitable collecting tank, arranged below the same transport plane. The collected glaze is then pumped back to feed the veil glazing apparatus again.

Although the veil glazing technique is generally considered as a convenient, fast and effective glazing technique, which produces a fine tile finish, it nevertheless has some drawbacks which can create problems when used in a tiles manufacturing line.

First of all, the veil of glaze inevitably affects the conveyor surface, at least on the conveyor gaps between consecutive tiles. Glaze removing means are usually provided for removing the glaze from the conveyor surface, but some glaze traces remain on the same surface, and subsequently on the conveyor pulleys and on the other conveyor driving devices. The whole conveyor becomes dirty and then unusable very quickly, and the glazing process must be often stopped in order to clean the conveyor surfaces and devices.

Moreover, the glaze remains affect and smears the lower face of tiles, thus compromising the look of the same tiles and giving a bad feeling to the commercial product.

A second drawback consists in that the glaze that affects the conveyor surface also becomes dirty, as it collects dust, dried up glaze and other remains from the surface; these remains cannot be entirely removed by the filtering devices provided on-line. This can modify the colour and viscosity features of the glaze veil which is applied on the subsequent tiles that are processed in the same glazing apparatus.

In order to overcome some of the aforesaid drawbacks, it is known a carpet conveyor wherein the tiles are transported on two consecutive branches of the conveyor. The branches are separated by a transverse gap. The veil glazing apparatus is arranged over the conveyor so that the veil falls exactly in the gap between the two conveyor branches, without affecting the same.

This latter type of conveyor has some more drawbacks. When a tile leaves the upstream conveyor branch, and before it reaches the downstream conveyor branch, a front portion of the tile crosses the transverse gap with its whole front edge. Subsequently, it engages the edge of the downstream conveyor branch, again with its whole front edge, and only when engaged it is supported by the carpet surface of the downstream branch.

Several factors, like the gap width, the tile dimension and its forwarding speed can set the tile swinging, even slightly, when crossing the transverse gap. By consequence, it can get jammed without engaging the downstream branch correctly. It is also possible for the tile to be just slowed up when crossing the glaze veil, or diverted from its original direction. In both cases this is a serious problem, because the glaze layer applied on the tile surface becomes non-homogeneous, thus compromising the product look.

In order to limit as much as possible the aforesaid drawbacks, in some prior art apparatus there was an attempt to reduce the transversal gap width between the conveyor branches, by using rollers of smaller diameter for supporting and driving the carpet conveyor on the gap sides of both branches. Nevertheless said diameter cannot be decreased as wanted, because the wrapping diameter of a carpet conveyor of the kind usable for transporting ceramic tiles cannot be as small as desired. The above described problem can then be somewhat limited, but it cannot be solved for all the tile size to be processed.

A very urgent demand for the above kind of conveyors is also that of reducing the dust and debris carried out by the tiles transported by the same conveyors, and to be able in any case to remove dust and debris by frequently washing the conveyor with flowing water.

A further demand is to guarantee that the tiles are transported as gently as possible, without any sudden speed variation or shake, which could in turn move the tiles from their original position and disturb the subsequent glaze application.

The main object of the present invention is to provide a conveyor device for transporting of articles, like ceramic tiles, in a veil application line of a decorating product to the above tiles, wherein the tiles conveyor is not affected by the glaze veil and then it can be kept free from the veil remains, the tiles are transported gently and with no shakes, the conveyor surface is always free of dust and debris, and the conveyor surface can be frequently washed without any long-term damage to the same conveyor.

A further object of the present invention is to provide a conveyor device wherein the size of the support pulleys is not critical at all.

A further object of the present invention is to provide a conveyor device which does not dirt the lower tiles surface with fresh glaze and, by consequence, which does not cause any glaze contamination to the subsequent tiles processing apparatus.

Again a further object of the present invention is to provide a conveyor device that is easy to manufacture and to maintain.

All the aforesaid objects are attained by a conveyor for transporting ceramic tiles across a veil glaze apparatus which is made according to the contents of the appended Claims. All the characteristic features of the present invention will be pointed out in the following detailed description, with reference to non-exclusive embodiments of the invention and to the accompanying drawing tables, wherein:
- figure 1 shows schematically a side view of a veil glazing line for processing of ceramic tiles, embedding a conveyor device according to a firs embodiment of the present invention;
- figure 2 shows schematically a top view of the veil glaze application line of figure 1;
- figure 3 shows schematically an enlarged portion of a branch of the conveyor shown in figure 1;
- figure 4 shows a cross sectional view of a belt according to section line IV-IV of figure 3;
- figure 5 shows schematically a top view of a second embodiment of the conveyor device made according to the present invention;
- figure 6 shows schematically a top view of a third embodiment of the conveyor device made according to the present invention.

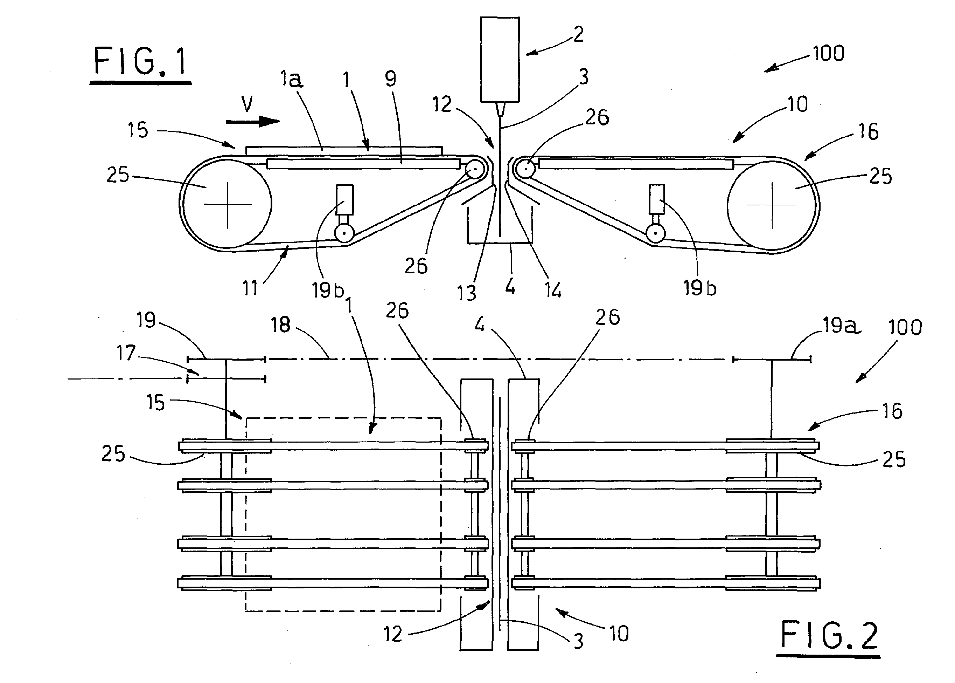

Referring now to figures 1 and 2, numeral 100 indicates, in its whole, a line for veil application of a decorating product, e.g. glaze, to ceramic tiles 1. The line 100 embeds a first embodiment of a conveyor device 10 for transporting the aforesaid tiles 1 made according to the present invention.

The glaze application line 100 moreover comprises a veil glazing apparatus 2, of a conventional type, which creates a continuous veil 3 of glaze, a part thereof being fit to lay on a upper face 1a of tile 1 when the same tile 1 crosses the veil 3. It is also provided, below the conveyor 100, a collecting tank 4 that collects the glaze which does not affect the tiles 1.

The veil glazing apparatus 2 is arranged crosswise with respect to the conveyor 10. More particularly, in the described embodiment the glaze veil 3 has a straight shape.

The conveyor device 10 has a substantially horizontal extension, and drives a series of tiles 1 according to a transporting direction V, through the glaze veil 3 and then downstream of the same glaze veil 3 to subsequent known tiles processing stations.

The conveyor device 10 comprises a pair of branches, respectively an upstream branch 15 and a downstream branch 16 with respect to the glaze veil 3 position, that are arranged subsequently along the tiles 1 processing path. The upstream branch 15 and the downstream branch 16 are separated by a transverse gap 12, arranged exactly at the glaze veil 3 fall, and having a shape identical to the glaze veil 3 shape.

In order to obtain a so shaped transverse gap 12, the upstream branch 15 and the downstream branch 16 of the conveyor 10 are suitably made with a plurality of very narrow, closed loop belts 11. Belts 11 are arranged parallel one each other, and at a mutual distance depending on the minimum size of tiles 1 to transport.

Each belt 11 is driven and supported by a pair of pulleys, respectively a driving pulley 25, at the far conveyor end, with respect to the transverse gap 12, and an idle pulley 26, at the proximal conveyor end.

The driving pulleys 25 are suitably operated by motors for driving the upstream branch 15 and the downstream branch 16 at the same transport speed. As a particular, and non limiting solution, a single motor 17 can be provided, as schematically illustrated in figure 2, that operates on the shaft of the upstream branch 15 driving pulleys. The two shafts of both conveyor branches 15,16 are mechanically coupled one each other, by means of a transmission belt 18 and of a pair of pulleys 19,19a of identical diameter, keyed on the same shafts.

According to the present invention, as a non-optimal solution, standard, very narrow polyurethane belts commonly used in the ceramic industry for transporting ceramic products could be used as belts 11.

Nevertheless, in order to obtain a very narrow transverse gap 12, the diameter of the idle pulleys 26 must be as small as possible. Since the aforesaid polyurethane belts, even if they are very narrow, cannot be bent to a sufficiently small diameter, their use in the conveyor made according to the present invention is limited to such applications where only large-sized or medium-sized tiles 1 have to be processed.

A further drawback that could arise when using the narrow polyurethane belts comes from that they are normally available as linear elements. In order to obtain a closed-loop belt, it is therefore necessary to exactly cut a linear belt, and then to weld them by end, with known techniques. The results of the aforesaid operation greatly depend on the operator's skill. A non-perfectly made welding operation results in an irregularity in the closed-loop belt, which can easily lead to produce jolts and shiftings to the transported tiles. Moreover, if they are non-perfectly made, the welding point becomes a weakness point in a closed-loop belt, which can cause a sudden break thereof.

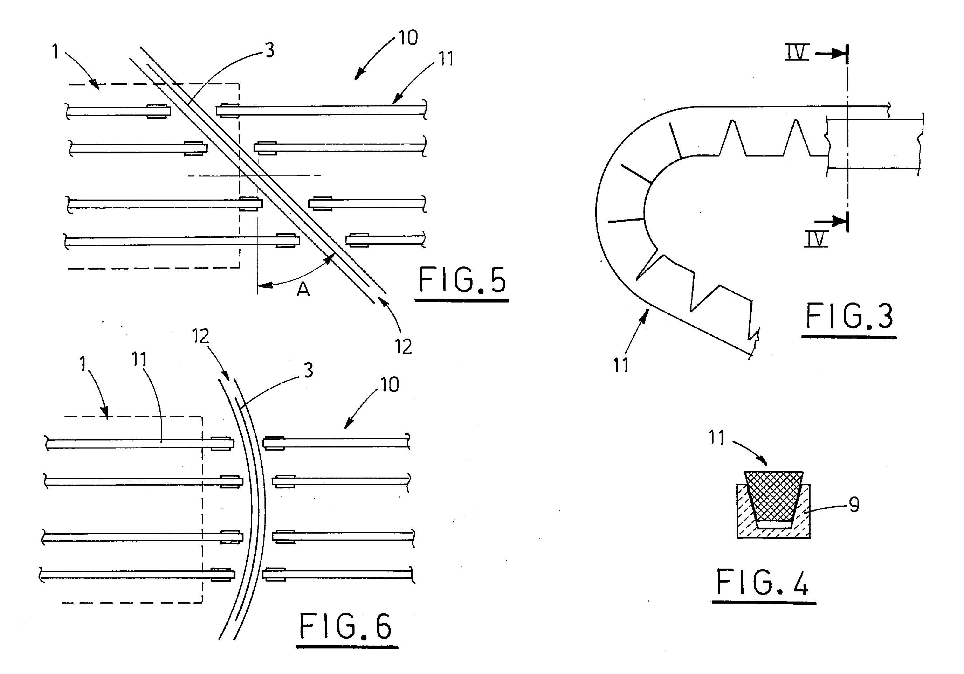

For the reason stated above, a very important aspect of the present invention is that the closed-loop belts are made using trapezoidal, toothed transmission belts, as shown in figure 3 and 4. Said belts are originally manufactured as closed-loop belts, they are sized to a number of standard lengths, and they are available on the market to be used for purposes totally different from articles transporting.

Using the aforesaid kind of belts 11 allows, first of all, to obtain very small bending radius (figure 3 shows the behaviour of the toothed bent around at a small diameter idle pulley 26). Moreover, because of the needs of the conventional, transmission use which is the appointed use for said belts, they are made very flexible, and they resist very well to a great number of washes carried out with water and most of the cleansing agents.

The belts 11 are moreover supported, at the upper branch of the conveyor 10, by linear guides 9, made with a suitable plastic material, as polystone or similar synthetic material.

In order to guarantee the correct tension to the belts 11 the conveyor 10 comprises, for each one of the aforesaid belts 11, a belt tightener device 19, of known type.

At the longitudinal edges of the transverse gap 12 there is moreover provided a pair of shaped plates 13,14, fit to prevent dust and debris eventually transported by the toothed belts 11 from falling into the collecting tank 4.

When ceramic tiles have to be transported toward a veil glazing apparatus, both the upstream branch 15 and downstream branch 16 of the conveyor device 10 above described are started up to their nominal speed on the forwarding direction V by the motor 17. The upstream branch 15 is driven directly by the motor 17, while the downstream branch 16 is driven by means of the pulleys 19,19a and the driving belt 18. Tiles 1 to be glazed are feed on the transporting belts 11 of the upstream conveyor branch 15, with their front edge 1b arranged crosswise with respect to the forwarding direction V.

With no tiles 1 passing through the transverse gap 12, the glaze veil 3 falls totally into the gap 12, and therefrom it reaches the collecting tank 4, without affecting the conveyor 10.

When a tile 1 comes near the transverse gap 12, it trespasses the same gap 12 and receives a layer of glaze while crossing the glaze veil 12. Since, because of the particular kind of belts 11 which has been used, the transverse gap 12 width is very small, even small sized tiles 1 can trespass the gap 12 and then engage the subsequent downstream conveyor branch 16 with no problem.

In the above listed figures there is shown a conveyor 10 embodiment comprising four belts 11 arranged side by side and spaced apart one each other. It is therefore obvious that the real number of belt used to make the conveyor 10, as well as their mutual distance, can be conveniently varied and chosen according to the transverse width of the tiles 1 to be transported. Substantially, it is to be expected that even tiles 1 of small transverse width have to be transported and processed, it will be convenient to improve the number of belts to arrange side by side, and therefore to reduce their mutual distance.

A second embodiment of the conveyor 10 according to the present invention is shown in figure 5.

In this case, the veil glazing apparatus 2 is arranged so that its corresponding glaze veil 3 is oriented slantwise with respect to the conveyor 10. More particularly, the glaze veil 3 has a straight shape, and it forms a non-zero angle A with the front edge 1 b of the incoming tile 1.

Because of the transverse gap 12 shape, each belt 11 has of course a different length, progressively growing along the transverse direction. For the same reason, the shortest belt 11 of the upstream conveyor branch 15 counterfaces the longest belt 11 of the downstream conveyor branch 16.

When a tile 1 reaches the transverse gap 12, it becomes to engage progressively the same gap 12 and the glaze veil 3. In fact, when a side of a tile 1 engages the transverse gap 12 and ceases to be supported by a belt 11 of the upstream conveyor branch 15, the remaining portion of the tile 1 is still supported by the other belts of the same conveyor branch 15. When the opposite side of the tile 1 is not supported anymore by the underlying belt 11 of the upstream conveyor branch 15, its first side has already trespassed the transverse gap 12, and it is supported by at least one belt 11 of the downstream conveyor branch 16. In the way described above, it does never happens that a whole cross section of the tile 1 is engaged with the transverse gap 12.

As far as it regards the interaction between the tile 1 and the glaze veil 3, because of the engagement angle between the same tile and veil, the front edge 1b of the tile 1 "cuts" progressively the glaze veil 3 until the entire transverse extension of the tile 1 lays under the same glaze veil 3. This engagement mode reduces greatly the "wrapping" effect exerted by the veil adhesion forces on the lower face of the tile 1. Thus the glaze veil does not wraps under the tile, and therefore it does not dirt its lower face nor the surfaces of the apparatus that subsequently engage the same tile.

A third embodiment of the present invention, shown in figure 6, is used together with veil glazing apparatus fit to generate a so called "bell" shape. These glazing apparatus are able to generate a glaze veil having a curvilinear shape. Therefore, in a corresponding conveyor 10, the idle pulleys 26 and, by consequence, the belt length of the upstream conveyor branch 15 belts and of the downstream conveyor branch 16 belts, follow the shape of the aforesaid curvilinear glaze veil, in order to obtain a transverse gap 12 having the same shape.

The advantages arising from the above described third embodiment of the present invention are substantially the same of those already described for the previous second embodiment.

The present invention, as previously described, provides several, considerable advantages with respect to the conventional, prior art conveyor devices.

First of all, the transverse gap 12 can have a very small width even in a conveyor 10 made with narrow belts, and therefore it can achieve all the features and manufacturing advantages which are typical of the known narrow belt conveyors with respect to the technical solution comprising a closed-loop carpet.

Another advantage is that it is now possible to shape the transverse gap 12 exactly as the shape of each veil glazing apparatus available in the market.

A further advantage is that the conveyor made according to the present invention prevents the tile lower face to be affected by the glaze veil, and then prevents the conveyor belts and the subsequent apparatus in the tiles processing line to be dirtied by the tiles.

Another advantage is that the so-manufactured conveyor is extremely reliable, it is simple to set-up and that it is not damaged by continuous washes with flowing water to which it is subject when mounted in a processing line.

The present invention has been described, with reference to the accompanying drawing tables, for exemplifying and non limiting purposes. It is therefore apparent that all the modifications or variants comprised in the following Claims will be considered as included in the invention scope.

## Claims

1. Conveyor device for transporting ceramic tiles 1 or similar articles in an application line 100 for applying a veil of a decorating product, as glaze for ceramic tiles, on said tiles 1, said application line 100 comprising at least one veil glazing apparatus 2, fit to generate a continuous veil 3 of said decorating product and to lay down a part of said glaze veil 3 on a face 1a of said tiles 1, while the same tiles 1 are passing through said glaze veil 3 carried out by said conveyor device 10 according to a forwarding direction V, a collecting tank 4 for collecting the decorating product that does not affect said tiles 1, arranged below said conveyor device 10 and below said glaze veil 3, said conveyor device 10 being **characterized in that** it comprises one pair of conveyor branches, respectively a upstream conveyor branch 15 and a downstream conveyor branch 16, subsequently arranged and synchronously operated, between said upstream conveyor branch 15 and downstream conveyor branch 16 being provided a transverse gap 12, placed exactly to cross the falling surface of said glaze veil 3 and having a shape substantially following the glaze veil horizontal section, each one of the aforesaid conveyor branches 15,16 moreover comprising a plurality of narrow belts 11, shaped as closed-loop belts, arranged parallel one each the other and also parallel to the forwarding direction V.

2. Conveyor device according to Claim 1, **characterized in that** all said narrow belts 11 are closed-loop transmission belts.

3. Conveyor device according to Claim 2, **characterized in that** said closed-loop transmission belts 11 are toothed transmission belts.

4. Conveyor device according to Claim 2, **characterized in that** said narrow belts 11 have a trapezoidal cross section.

5. Conveyor device according to Claims 2, 3 or 4, **characterized in that**, for each one of said narrow belts 11, a corresponding straight guide is provided, fit to support the upper branch of said closed-loop narrow belts 11.

6. Conveyor device according to each one of the previous Claims, **characterized in that** said narrow belts 11 are supported, at the end of their respective conveyor branch facing said transverse gap 12, by corresponding small diameter pulleys 26.

7. Conveyor device according to Claim 1, **characterized in that** said transverse gap 12 has a substantially rectilinear shape, and it is oriented according to a predefined angle A with respect to the front edge 1b of the tiles 1 to be decorated, said glaze veil 3 also having a rectilinear shape and being oriented accordingly.

8. Conveyor device according to Claim 1, **characterized in that** said transverse gap 12 has a curvilinear shape, and that the aforesaid glaze veil 3 has a curvilinear shape matching the transverse gap 12 shape.

9. Conveyor device according to Claim 1, **characterized in that**, at the longitudinal edges of said transverse gap 12 there is provided one pair of shaped plates 13,14, fit to prevent the remains of dust and debris eventually transported by said narrow belts 11 to fall into said collecting tank 4.

10. Conveyor device according to Claim 1, **characterized in that** said upstream conveyor branch 15 and downstream conveyor branch 16 are synchronously operated by a motor 17, by means of a transmission belt 18 and by means of one pair of pulleys 19,19a keyed on the driving pulleys shafts, respectively of said upstream conveyor branch 15 and downstream conveyor branch 16.
